# EUROPEAN PATENT SPECIFICATION

(11) **EP 3 482 667 B1**
(45) Date of publication and mention of the grant of the patent: **30.03.2022**
(21) Application number: 18205400.7
(22) Date of filing: 09.11.2018
(51) Int. Cl.: A47L 9/28

(54) **DUST SENSOR MODULE AND OPERATING METHOD THEREOF**
STAUBSENSORMODUL UND BETRIEBSVERFAHREN DAFÜR
MODULE DE CAPTEUR DE POUSSIÈRE ET SON PROCÉDÉ DE FONCTIONNEMENT

(30) Priority: 13.11.2017 KR 20170150463
(43) Date of publication of application: 15.05.2019
(73) Proprietor: LG Electronics Inc., Yeongdeungpo-gu Seoul 07336 (KR)
(72) Inventor: BAE, Yonghwan, Seoul 08592 (KR); KO, Jaehwan, Seoul 08592 (KR); PARK, Yunhee, Seoul 08592 (KR); JUNG, Seungbae, Seoul 08592 (KR); CHOI, Wonjun, Seoul 08592 (KR)
(74) Representative: Vossius & Partner Patentanwälte Rechtsanwälte mbB

(56) References cited:
- EP-A1- 2 113 182
- EP-A2- 1 333 555
- US-A- 5 815 884
- US-A1- 2010 186 187

## Description

### BACKGROUND

The present invention relates to a dust sensor module and a method of operating the same, and, more particularly, to a dust sensor module capable of being attached to or detached from a cleaner, and a method of operating the same.

In general, a vacuum cleaner (hereinafter, referred to a cleaner) refers to a device for sucking in air including dust using suction force generated by a suction motor mounted in a main body and filtering out dust in the main body.

With development of battery technology, a wireless cleaner operating without a commercial power line, that is, an electric cord, has appeared. Such a wireless cleaner includes a battery therein and is driven using the power of the battery.

However, since the capacity of the battery mounted in the wireless cleaner is relatively small in consideration of the size and weight thereof, the cleaner cannot be used for a long time. In addition, if a wired cleaner is used for a long time, power consumption is large. Accordingly, when the cleaner continuously operates with high suction force, power consumption is increased. In particular, a time when the wireless cleaner is continuously used is shortened.

EP 1 333 555 A2 discloses a dust sensor module according to the preamble of claim 1 and relates to a process for avoiding the standby discharge of a battery-powered sensor signal evaluation circuit, especially for a dust sensor.

US 2010/186187 A1 relates to a tilt sensor for a cleaning device that makes use of an optical sensor to interrupt operation of the device.

US 5,815,884 A relates to a vacuum cleaner which detects a quantity of dust and visually displays the detected quantity of dust.

The present invention provides a dust sensor module mounted in a cleaner to minimize power consumption, and a method of operating the same.

The present invention provides a dust sensor module capable of minimizing noise generated during a communication process with a cleaner, and a method of operating the same.

### SUMMARY

A dust sensor module according to one embodiment of the present invention includes a battery supplying power, a sensor sensing dust using power supplied from the battery, a detector detecting whether or not the dust sensor module is used, and a controller operating in a first mode or a second mode based on a detection result of the detector, wherein the controller supplies the power to the sensor in the first mode and cuts off power supplied to the sensor in the second mode.

The dust sensor module may further include a switch turned on or off between the battery and the sensor, and the controller may turn the switch on in the first mode and turn the switch off in the second mode.

The detector may include an acceleration sensor sensing a tilt of the dust sensor module, and the controller may operate in the first mode when a tilt change rate of the dust sensor module is equal to or greater than a set value and operate in the second mode when the tilt change rate of the dust sensor module is less than the set value.

The controller may count a time when the switch is turned on in the first mode, and turn the switch off when the counted time is equal to or greater than a set time.

The controller may reset the counted time when tilt change of the dust sensor module is sensed while the time when the switch is turned on is counted.

The detector may include a tilt sensor sensing a tilt of the dust sensor module depending on whether or not a terminal of the tilt sensor is contacted, and the controller may operate in the first mode when the terminal of the tilt sensor is contacted and operate in the second mode when the terminal of the tilt sensor is not contacted.

The tilt sensor may include a terminal and a moving element which contacts or does not contact the terminal according to movement thereof in an internal space, and the terminal may be formed in a direction in which the moving element moves, when the dust sensor module is used in a state of being mounted in a cleaner.

The tilt sensor may be mounted in a handle of the cleaner or an extension pipe having an air suction nozzle connected thereto.

The controller may count a time when the switch is turned on in the first mode, and turn the switch off when the counted time is equal to or greater than a set time.

The controller may reset the counted time when tilt change of the dust sensor module is sensed while the time when the switch is turned on is counted.

The dust sensor module may further include a converter converting a voltage supplied from the battery into a direct current (DC) voltage between the battery and the switch.

The first power supplied to the controller in the first mode may be greater than second power supplied to the controller in the second mode.

The second power may be minimum power required to release the second mode.

The dust sensor module may further include a communication unit transmitting and receiving a signal to and from a cleaner in which the dust sensor module is mounted, and the communication unit may receive power from the battery in the first mode and cut off power supplied from the battery in the second mode.

The controller may transmit a dust sensing signal to the cleaner in the first mode.

According to the embodiment of the present invention, it is possible to easily attach or detach the dust sensor module to or from the cleaner. A user can easily mount or detach the dust sensor module in or from the cleaner.

According to the embodiment of the present invention, the dust sensor module can be attached to or detached from various types of cleaners and can be commonly used.

According to the embodiment of the present invention, if the dust sensor module is used in a state of being mounted in the cleaner, it is possible to improve battery efficiency of the dust sensor module. Therefore, it is possible to reduce power consumption of the dust sensor module, to increase a time when the dust sensor module is continuously used in a state of being mounted in the cleaner, and to increase the replacement cycle of the battery provided in the dust sensor module.

According to the embodiment of the present invention, it is possible to minimize noise generated when the detachable dust sensor module communicates with the cleaner.

### BRIEF DISCRIPTION OF THE DRAWINGS

FIG. 1 is a perspective view of a vacuum cleaner according to an embodiment of the present invention.
FIG. 2 is a block diagram showing a vacuum cleaner including a dust sensor module according to an embodiment of the present invention.
FIG. 3 is a perspective view showing a vacuum cleaner including a dust sensor module according to an embodiment of the present invention.
FIG. 4 is a control block diagram of a dust sensor module according to a first embodiment of the present invention.
FIG. 5 is a flowchart illustrating a method of operating a dust sensor module according to the first embodiment of the present invention.
FIG. 6 is a control block diagram of a dust sensor module according to a second embodiment of the present invention.
FIG. 7 is a flowchart illustrating a method of operating a dust sensor module according to the second embodiment of the present invention.
FIG. 8 is a view illustrating the case where the terminal of a tilt sensor according to an embodiment of the present invention is contacted.
FIG. 9 is a control block diagram of a dust sensor module for minimizing noise generated by battery voltage change according to an embodiment of the present invention.

### DETAILED DESCRIPTION OF THE EMBODIMENTS

Hereinafter, embodiments of the present invention will be described in detail with reference to the drawings.

### <Vacuum cleaner>

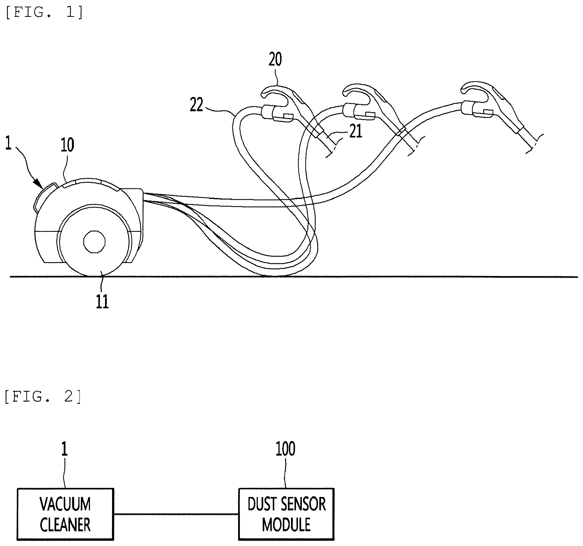

FIG. 1 is a perspective view of a vacuum cleaner according to an embodiment of the present invention.

The vacuum cleaner 1 according to the embodiment of the present invention may include a cleaner body 10 including a suction motor, a suction hose 22 connected to the cleaner body 10, a handle 20 connected to the suction hose 22, and an extension pipe 21 connected to the handle 20. The extension pipe 21 may be connected with a nozzle (not shown) for sucking in air on a floor surface.

The cleaner body 10 may include a plurality of wheels 11 for movement of the cleaner body 10, a plurality of wheel motors (not shown) for rotating the plurality of wheels 11, a communication unit (not shown) for communicating with an external device, and a controller (not shown) for configuring the components configuring the vacuum cleaner.

The suction hose 22 may be made of a flexible material and has s deformable shape.

A dust sensor module may be provided in any one of the handle 20 or the extension pipe 21.

### <Dust sensor module>

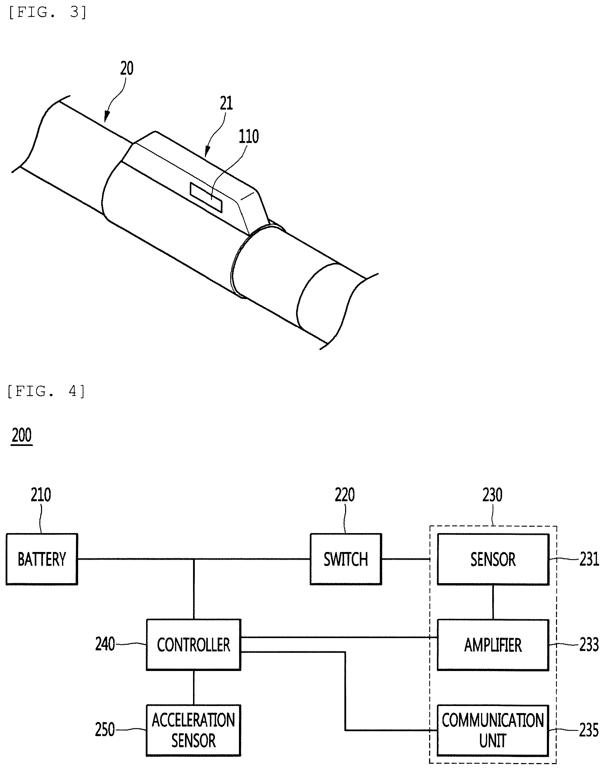

FIG. 2 is a block diagram showing a vacuum cleaner including a dust sensor module according to an embodiment of the present invention, and FIG. 3 is a perspective view showing a vacuum cleaner including a dust sensor module according to an embodiment of the present invention.

The vacuum cleaner 1 according to the embodiment of the present invention may include a dust sensor module 100 for sensing dust located on a floor surface.

According to one embodiment, the vacuum cleaner 1 including the dust sensor module 100 can increase suction force in an area in which dust is sensed and decrease suction force in an area in which dust is not sensed. Therefore, if the vacuum cleaner 1 includes the dust sensor module 100, it is possible to reduce power consumption.

Meanwhile, the dust sensor module 100 may be fixed to the vacuum cleaner 1. Alternatively, the dust sensor module 100 may be detachably provided in the vacuum cleaner 1.

If the dust sensor module 100 is fixed to the vacuum cleaner 1, the dust sensor module 100 may be controlled by the controller (not shown) of the vacuum cleaner 1.

If the dust sensor module 100 is detachably provided in the vacuum cleaner 1, the dust sensor module 100 may be controlled through a communication signal transmitted to or received from the communication unit (not shown) of the vacuum cleaner 1.

### <Detachable dust sensor module>

Hereinafter, the dust sensor module 100 detachably provided in the vacuum cleaner 1 will be described in detail.

As shown in FIG. 3, the dust sensor module 100 may be mounted in the extension pipe 21 of the vacuum cleaner 1. However, this is exemplary, and the dust sensor module 100 may be mounted in the handle 20 of the vacuum cleaner 1.

If the dust sensor module 100 is detached from the vacuum cleaner 1, the vacuum cleaner 1 may operate with suction force of the suction motor according to power input by a user, regardless of presence/absence of dust.

If the dust sensor module 100 is mounted in the vacuum cleaner 1, the vacuum cleaner 1 may operate while changing the suction force of the suction motor based on presence/absence of dust and the amount of dust.

At this time, the dust sensor module 100 may sense dust and consume a lot of power in order to transmit and receive a communication signal to and from the vacuum cleaner 1. Accordingly, there may be a need for a method of reducing power consumption of the dust sensor module 100 including the battery, which is attachable to or detachable from the vacuum cleaner 1, and increasing a time when the dust sensor module 100 is used.

According to various embodiments of the present invention, the dust sensor module may operate in a wakeup mode when the dust sensor module is used and operate in a sleep mode when the dust sensor module is not used. The dust sensor module may include a sensor for detecting whether the dust sensor module is used. The sensor may include an acceleration sensor and a tilt sensor.

### <Dust sensor module according to first embodiment>

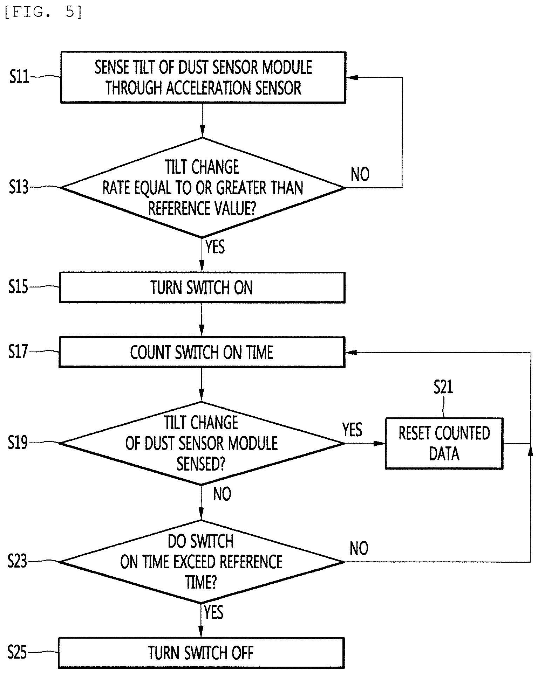

FIG. 4 is a control block diagram of a dust sensor module according to a first embodiment of the present invention, and FIG. 5 is a flowchart illustrating a method of operating a dust sensor module according to the first embodiment of the present invention.

The dust sensor module 200 according to the first embodiment of the present invention may operate in a sleep mode, in which power supplied to a controller 240 and a main control element 230 is cut off, when the dust sensor module 200 is not used, and operate in a wakeup mode, in which power is supplied to the controller 240 and the main control element 230, when the dust sensor module 200 is used. In particular, the dust sensor module 200 may detect whether the dust sensor module 200 is used through an acceleration sensor 250 and operate in the sleep mode or the wakeup mode, thereby minimizing power consumption.

Specifically, the dust sensor module 200 according to the first embodiment of the present invention may include a battery 210, a switch 220, a sensor 231, an amplifier 233, a communication unit 235, a controller 240 and an acceleration sensor 250.

The battery 210 may include a dry cell.

The battery 210 may be connected to an external charger for supplying power. The battery 210 may receive power from the external charge, thereby being charged. The dust sensor module 200 may be mounted in the vacuum cleaner 1 and used in a state in which the battery 2010 is charged to a predetermined capacity or more.

The battery 210 may supply power to the components provided in the dust sensor module 200. For example, the battery 210 may supply power to the controller 240, the acceleration sensor 250 and the main control element 230. Although the main control element 230 may include the sensor 231, the amplifier 233 and the communication unit 235, this is exemplary and other components may be further included or some components may be omitted.

The switch 220 may be turned on or off by the controller 240. When the switch 220 is turned on, the battery 210 supplies power to the main control element 230 and, when the switch 210 is turned off, the battery 210 does not supply power to the main control element 230.

The switch 220 may be controlled by the controller 240. The controller 240 may turn the switch 220 on during operation in a sleep mode and turn the switch 220 off during operation in the wakeup mode. Here, the sleep mode indicates a state in which the controller 240 receives minimum power for executing an event for releasing the sleep mode, and the wakeup mode may indicate a state in which power is supplied to the controller 240, the acceleration sensor 250 and the main control element 230 as the sleep mode is released. Accordingly, the power supplied to the controller 240 in the sleep mode may be less than power supplied to the controller 240 in the wakeup mode.

The sensor 231 may sense dust located on the floor. For example, the sensor 231 may be an optical sensor. The optical sensor may emit light such as ultrasonic waves or infrared lights and sense presence/absence of dust and the amount of dust through the amount of light returned from an object.

The amplifier 233 may be connected to the sensor 231 to receive and amplify a dust sensing result signal from the sensor 231. The amplifier 233 may amplify the dust sensing result signal and transmit the amplified dust sensing result signal to the controller 240.

The controller 240 may receive the amplified dust sensing result signal from the amplifier 233. The controller 240 may control the communication unit 235 to transmit the dust sensing result signal to the vacuum cleaner 1.

The communication unit 235 may transmit the dust sensing result signal to the vacuum cleaner 1.

Meanwhile, the controller 240 controls overall operation of the dust sensor module 200. For example, the controller 240 may perform control to operate in the sleep mode or the wakeup mode through the sensing result of the acceleration sensor 250.

### <Acceleration sensor>

The dust sensor module 200 according to the first embodiment of the present invention may operate in the sleep mode or the wakeup mode through the sensing result of the acceleration sensor 250.

Specifically, the acceleration sensor 250 may sense movement of the dust sensor module 200 and digitize and output a degree of movement. For example, the acceleration sensor 250 may sense and recognize change in acceleration of gravity as tilt change of the dust sensor module 200 and digitize and output a tilt change rate.

The acceleration sensor 250 may transmit the output tilt change rate to the controller 240, and the controller 240 may operate in the sleep mode or the wakeup mode based on the tilt change rate.

Referring to FIG. 5, the controller 240 may sense the tilt of the dust sensor module through the acceleration sensor 250 (S11) .

The controller 240 may control the acceleration sensor 250 to sense the tilt of the dust sensor module in the sleep mode. In the sleep mode, the switch 220 may be turned off and the battery 210 may not supply power to the sensor 231, the amplifier 233 and the communication unit 235.

The controller 240 may control the acceleration sensor 250 to sense the tilt of the dust sensor module, in order to sense occurrence of an event for releasing the sleep mode.

The controller 240 may determine whether the tilt change rate is equal to or greater than a set value (S13).

The controller 240 may output the tilt change rate based on the sensed tilt and determine whether the tilt change rate is equal to or greater than a predetermined set value.

The set value indicates a boundary value between a state in which the dust sensor module 200 is used and a state in which the dust sensor module 200 is not used, and may be set based on a tilt change rate when the dust sensor module 200 is used and a tilt change rate when the dust sensor module 200 is not used. For example, the tilt change rate when the dust sensor module 200 is not used may be 0 to 150 and the tilt change rate when the dust sensor module 200 is used may be 200 to 600. A reference value may be set to any one of 150 to 200. However, this is exemplary and the present invention is not limited thereto.

The set value may set in the dust sensor module 200 by default.

Upon determining that the tilt change rate is less than the set value, the controller 240 may sense the tilt of the dust sensor module 200 through the acceleration sensor 250.

Meanwhile, the controller 240 may turn the switch 220 on (S15), upon determining that the tilt change rate is equal to or greater than the set value.

That is, upon determining that the tilt change rate is equal to or greater than the set value, the controller 240 may sense that an event for releasing the sleep mode has occurred, switch the operation mode from the sleep mode to the wakeup mode, and turn the switch 220 on.

The controller 240 may turn the switch 220 on and count a switch on time (S17).

This prevents power consumption from increasing as the controller 240 continuously operates in the wakeup mode.

However, in order to prevent the operation mode from being switched from the wakeup mode to the sleep even though the dust sensor module 200 is still in use, the controller 240 may sense tilt change of the dust sensor module while counting the switch on time.

The controller 240 may determine whether tilt change of the dust sensor module is sensed (S19). The controller 240 may reset the counted data (S21) when tilt change of the dust sensor module is sensed.

That is, when tilt change is sensed, the controller 240 may recognize that the dust sensor module 200 is continuously used and return to step S17 to count the switch on time from 0 again.

Meanwhile, the controller 240 may determine whether the counted switch on time exceeds a reference time (S23), when tilt change of the dust sensor module is not sensed.

That is, upon recognizing that the dust sensor module does not move for a predetermined reference time or more, the controller 240 determines that the dust sensor module 200 is not used to switch the operation mode from the wakeup mode to the sleep mode.

Accordingly, the controller 240 may return to step S17 to continuously count the switch on time and to sense tilt change when the counted switch on time does not exceed the reference time, and may turn the switch 220 off (S25) when the counted switch on time exceeds the reference time.

When the switch 220 is turned off, power supplied from the battery 210 to the sensor 231, the amplifier 233 and the communication unit 235 may be cut off.

According to the first embodiment of the present invention, when movement of the dust sensor module 200 is sensed through the acceleration sensor 250 to change the operation mode, it is possible to secure operation reliability. That is, as compared to a method of sensing pressure through a pressure sensor when a vacuum cleaner operates and changing an operation mode, the present invention has no possibility of occurrence of an error due to a vacuum degree deviation and thus can secure operation reliability. In addition, the acceleration sensor is cheaper than the pressure sensor and does not require harness, thereby being economical.

### <Dust sensor module according to second embodiment>

A dust sensor module according to a second embodiment of the present invention may include a tilt sensor instead of an acceleration sensor.

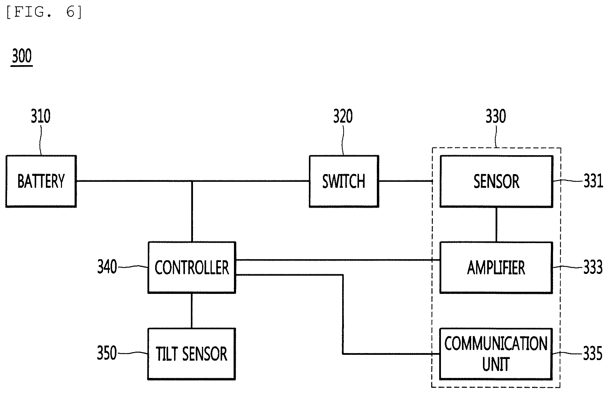

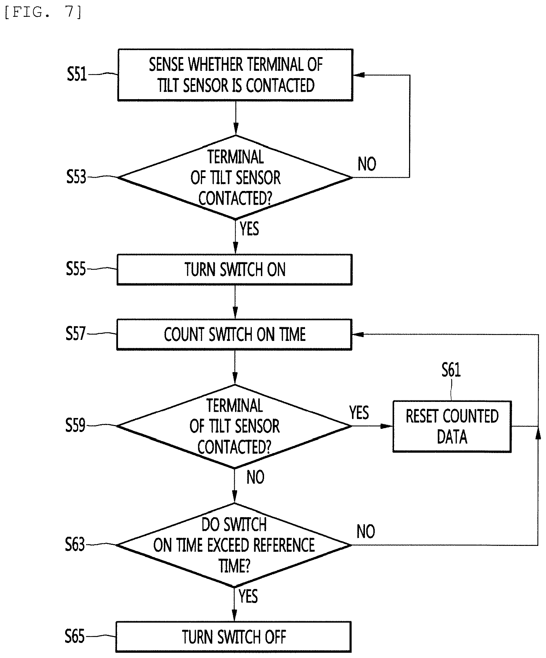

FIG. 6 is a control block diagram of a dust sensor module according to a second embodiment of the present invention, and FIG. 7 is a flowchart illustrating a method of operating a dust sensor module according to the second embodiment of the present invention.

The dust sensor module 300 according to the second embodiment of the present invention may operate in a sleep mode, in which power supplied to a controller 340 and a main control element 330 is cut off, when the dust sensor module 300 is not used, and operate in a wakeup mode, in which power is supplied to the controller 340 and the main control element 330, when the dust sensor module 300 is used, similarly to the dust sensor module 200 according to the first embodiment. However, the dust sensor module 300 according to the second embodiment is different from the dust sensor module 200 according to the first embodiment in that the dust sensor module 300 operates in the sleep mode or the wakeup mode by detecting whether or not the dust sensor module 300 is used through the tilt sensor 350.

Specifically, the dust sensor module 300 according to the second embodiment of the present invention may include a battery 310, a switch 320, a sensor 331, an amplifier 333, a communication unit 335, a controller 340 and a tilt sensor 350.

The battery 310, the switch 320, the sensor 331, the amplifier 333, the communication unit 335 and the controller 340 are similar to those described in FIG. 4 and a detailed description will be omitted.

### <Tilt sensor>

The tilt sensor 350 senses tilt change and may include a moving element such as a ball or mercury therein. The moving element in the tilt sensor 350 moves when the tilt of the dust sensor module is changed and the moving element may or may not contact a terminal. The sensor 350 generates a contact signal when the moving element included therein contacts a contact terminal and transmit the contact signal to the controller 340.

Hereinafter, assume that the tilt sensor 350 includes a ball therein. The tilt sensor 350 may be formed such that the moving element included therein moves when the tilt is changed. In particular, the tilt sensor 350 may be formed, such that the terminal is not contacted when the dust sensor module 300 is not used in a state of being mounted in the vacuum cleaner 1 and the moving element moves to contact the terminal when the dust module 300 is used.

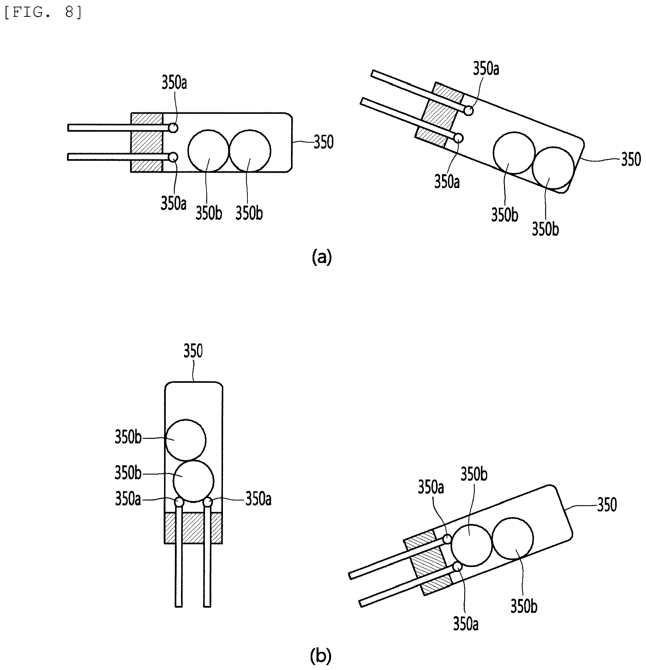

FIG. 8 is a view illustrating the case where the terminal of a tilt sensor according to an embodiment of the present invention is contacted.

The tilt sensor 350 may include a terminal 350a and a moving element 350b which contacts or does not contact the terminal 350a according to movement thereof in an internal space. The moving element 350b in the tilt sensor 350 may or may not contact the terminal 350a according to tilt. The terminal 350a may be formed in a direction in which the moving element 300 moves when the dust sensor module is used in a state of being mounted in the cleaner. For example, when the dust sensor module 300 is mounted in the vacuum cleaner 1, the tilt sensor 350 may be located in the handle 320 or the extension pipe 21 of the vacuum cleaner 1, and the terminal 350a may be formed in a direction in which the handle 20 or the extension pipe 21 is tilted.

The terminal 350a may be connected to the controller 340. When the moving element 350b contacts the terminal 350a, the controller 340 may recognize that an event for releasing the sleep mode has occurred.

Referring to (a) of FIG. 8, the terminal 350 is not contacted. The controller 340 may perform control to operate in the sleep mode.

Referring to (b) of FIG. 8, the moving element 350b contacts the terminal 350a. The controller 340 may recognize that an event for releasing the sleep mode has occurred as the terminal 350a is contacted, and perform control to operate in the wakeup mode.

FIGS. 6 and 7 will be described again.

The controller 340 may perform control to operate in the sleep mode when the terminal 350a of the tilt sensor 350 is not contacted and to operate in the wakeup mode when the terminal 350a of the tilt sensor 350 is contacted.

Specifically, referring to FIG. 7, the controller 340 may sense whether the terminal 350a of the tilt sensor 350 is contacted (S51).

The dust sensor module 300 may sense whether the terminal 350a of the tilt sensor 350 is contacted in the sleep mode.

When the dust sensor module 300 moves, the moving element 350b provided in the tilt sensor 350 may move and contact the terminal 350a.

The controller 340 may determine whether the terminal 350a of the tilt sensor 350 is contacted (S53).

When the terminal 350a of the tilt sensor 350 is contacted, a contact signal may be transmitted to the controller 340 and the controller 340 may determine whether the terminal 350a is contacted depending on whether the contact signal is received or not.

The controller 340 may continuously sense and determine whether the terminal 350a is contacted when the terminal 350a of the tilt sensor 350 is not contacted, and turn the switch 320 on (S55) when the terminal 350a of the tilt sensor 350 is contacted.

That is, the controller 340 may perform control to turn the switch 320 on to switch the operation mode from the sleep mode to the wakeup mode, when the terminal 350 is contacted. As the switch 320 is turned on, the battery 310 may supply power to the sensor 331, the amplifier 333 and the communication unit 335.

The controller 340 may count the switch on time (S57) after the switch is turned on.

Therefore, similarly to the description of FIG. 5, when use of the dust sensor module 300 is interrupted for a predetermined time or more, the operation mode is switched to the sleep mode, thereby minimizing power consumption.

The controller 340 may count the switch on time and determine whether the terminal 350a of the tilt sensor 350 is contacted (S59).

The controller 340 may reset the counted data (S61) and count the switch on time again, when the terminal 350a of the tilt sensor 350 is continuously contacted.

Meanwhile, the controller 340 may determine whether the counted switch on time exceeds a reference time (S63), when the terminal 350a of the tilt sensor 350 is not contacted.

The controller 340 may count the switch on time again and sense whether the terminal of the tilt sensor 350 is contacted, when the switch on time does not exceed the reference time.

The controller 340 may turn the switch 320 off when the switch on time exceeds the reference time (S65).

That is, the controller 340 may determine that the user does not intend to use use the dust sensor module 300 for a while and switch the operation mode from the wakeup mode to the sleep mode, when the switch on time exceeds the reference time. The controller 340 may turn the switch 320 off as the operation mode is switched to the sleep mode, and cut off the power supplied from the battery 310 to the main control element 330 as the switch 320 is turned off.

According to the second embodiment of the present invention, it is possible to perform control the operation mode to the sleep mode or the wakeup mode through physical contact and to simplify an operation algorithm. In addition, by using a cheap tilt sensor, it is possible to reduce manufacturing costs.

Meanwhile, the first and second embodiment may be independently applied or may be combined. For example, a dust sensor module according to a third embodiment may include an acceleration sensor and a tilt sensor. In this case, it is possible to minimize operation errors and to further improve reliability.

According to various embodiments of the present invention, the dust sensor module can reduce power consumption and can be used in a state of being detached from the vacuum cleaner 1. In addition, as the dust sensor mode can be used in a state of being detached from the vacuum cleaner 1, the dust sensor module may be commonly used in various types of cleaners such as a canister cleaner, a handy cleaner, etc. and various cleaner models.

### <Minimization of noise generated by battery voltage change>

Meanwhile, since a detachable dust sensor module receives power from a batter provided therein, the level of the supplied power may be changed according to the time when the dust sensor module is used. If the level of the supplied voltage is not constant, the intensity of light emitted from the sensor (for example, an optical sensor) may be changed and thus errors may occur in the sensing result.

Accordingly, the dust sensor module according to an embodiment of the present invention sense and reflect the voltage supplied from the battery to the sensing result of the sensor. For example, the amplifier may include a reference voltage comparison circuit. The reference voltage comparison circuit compares the voltage of the battery with a reference voltage when the amplifier amplifies the sensing result and corrects the sensing result according to a difference from the reference voltage.

However, in this case, when the amplifier including the reference voltage comparison circuit is located adjacent to the communication unit, communication noise generated in the communication unit may be input to the amplifier, thereby increasing noise in the dust sensing result. Accordingly, the dust sensor module according to an embodiment of the present invention may directly measure and input the voltage of the battery to the controller, thereby minimizing noise generated by battery voltage change.

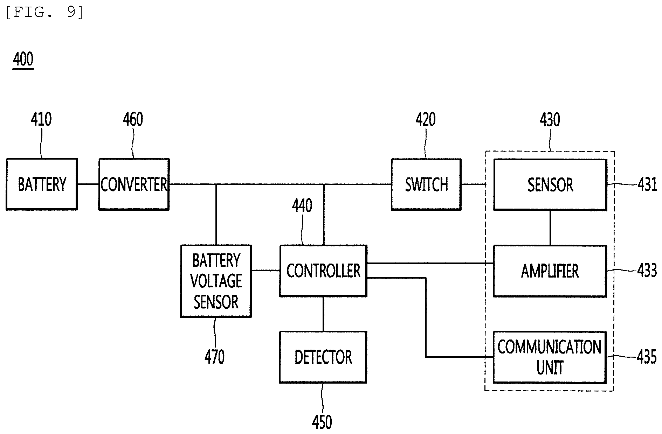

FIG. 9 is a control block diagram of a dust sensor module for minimizing noise generated by battery voltage change according to an embodiment of the present invention.

The dust sensor module 400 may include a battery 410, a converter 460 for removing an AC component included in the voltage supplied from the battery 410, a switch 420 for selectively supplying the voltage output from the converter 460 to a main control element 430, a battery voltage sensor 470 for sensing the voltage output from the converter 460, a controller 440 for controlling the components configuring the dust sensor module 400, and a detector 450 for transmitting an event occurrence signal for releasing a sleep mode or an event occurrence signal for releasing a wakeup mode to the controller 440.

The battery 410, the switch 420, the main control element 430, the controller 440 and the detector 450 are similar to those described above and a detailed description thereof will be omitted.

The converter 460 may perform control to remove the AC component from the voltage supplied from the battery 410 and to supply a voltage having a constant level to the sensor 430. That is, the converter 460 may convert the voltage supplied from the battery into a DC voltage between the battery and the switch. When the voltage having the constant level is supplied to the sensor 431, the sensor 431 may output power having a constant level. For example, the sensor 431 may be an optical sensor and the optical sensor may emit light having a constant intensity. Therefore, it is possible to prevent the sensor 431 from erroneously sense that there is dust even though there is no dust due to fluctuation of the output power.

The battery voltage sensor 470 sense and input the level of the voltage supplied to the sensor 431 to the controller 440. That is, the amplifier 433 may not receive and reflect the battery voltage to the dust sensing result, but the controller 440 may correct the dust sensing result by reflecting the sensed level of the voltage to the dust sensing result input through the amplifier 433.

Therefore, it is possible to minimize influence of RF communication noise generated in the communication unit 435 during battery voltage correction. That is, it is possible to minimize noise generated by battery voltage change.

In addition, according to an embodiment, the dust sensor module 400 may be formed such that the amplifier 433 and the communication unit 435 are located as far as possible. Therefore, it is possible to minimize influence of noise generated by the communication unit 435.

The description above is merely illustrative of the technical idea of the present invention, and various changes and modifications may be made by those skilled in the art without departing from the essential characteristics of the present invention.

Therefore, the embodiments disclosed in the present invention are intended to illustrate rather than limit the scope of the present invention, and the scope of the technical idea of the present invention is not limited by these embodiments.

The scope of protection of the present invention should be construed according to the following claims, and all technical ideas within the scope of equivalents should be construed as being included in the scope of the present invention.

## Claims

1. A dust sensor module (100, 200, 300, 400), comprising:
a battery (210, 310, 410) supplying power;
a sensor (231, 331, 431) sensing dust using power supplied from the battery (210, 310, 410);
a detector (250, 350, 450) detecting whether or not the dust sensor module (100, 200, 300, 400) is used; and
a controller (240, 340, 440) operating in a first mode or a second mode based on a detection result of the detector (250, 350, 450),
wherein the controller (240, 340, 440) supplies the power to the sensor (231, 331, 431) in the first mode and cuts off power supplied to the sensor (231, 331, 431) in the second mode,
**characterized in that**
the detector (250, 350, 450) comprises at least one of an acceleration sensor (250) or a tilt sensor (350),
wherein the acceleration sensor (250) is configured to sense a tilt of the dust sensor module (100, 200, 400),
wherein the tilt sensor (350) includes at least one terminal (350a) and at least one moving element (350b), and is configured to sense the tilt of the dust sensor module (100, 300, 400) depending on whether or not the moving element (350b) contacts the terminal (350a),
wherein the controller (240, 340, 440) operates in the first mode when a tilt change rate of the dust sensor module (100, 200, 400) is equal to or greater than a set value or when the moving element (350b) of the tilt sensor (350, 450) contacts the terminal (350a) of the tilt sensor (350, 450), and the controller (240, 340, 440) operates in the second mode when the tilt change rate of the dust sensor module (100, 200, 400) is less than the set value or the moving element (350b) of the tilt sensor (350, 450) not contacts the terminal (350a) of the tilt sensor (350, 450).

2. The dust sensor module (100, 200, 300, 400) of claim 1, further comprising a switch (220, 320, 420) turned on or off between the battery (110, 210, 310, 410) and the sensor (231, 331, 431),
wherein the controller (240, 340, 440) turns the switch (220, 320, 420) on in the first mode and turns the switch off in the second mode.

3. The dust sensor module (100, 200, 400) of claim 1 or 2, wherein the controller (240, 440) counts a time when the switch (220, 420) is turned on in the first mode, and turns the switch off when the counted time is equal to or greater than a set time.

4. The dust sensor module (100, 200, 400) of claim 3, wherein the controller (240, 440) resets the counted time when tilt change of the dust sensor module (100, 200, 400) is sensed while the time when the switch (220, 420) is turned on is counted.

5. The dust sensor module (100, 300, 400) of claim 1 or 2, wherein the tilt sensor (350, 450) includes:
the terminal (350a); and
the at least one moving element (350b) which contacts or does not contact the terminal (350a) according to movement thereof in an internal space, and
wherein the terminal (350a) is formed in a direction in which the at least one moving element (350b) moves, when the dust sensor module (100, 300, 400) is used in a state of being mounted in a cleaner (1).

6. The dust sensor module (100, 300, 400) of claim 5, wherein the tilt sensor (350, 450) is mounted in a handle (20) of the cleaner (1) or an extension pipe (21) having an air suction nozzle connected thereto.

7. The dust sensor module (100, 300, 400) of any one of claims 1, 2, 5 or 6, wherein the controller (350, 450) counts a time when the switch (320, 420) is turned on in the first mode, and turns the switch off when the counted time is equal to or greater than a set time.

8. The dust sensor module (100, 300, 400) of claim 7, wherein the controller (350, 450) resets the counted time when tilt change of the dust sensor module (100, 300, 400) is sensed while the time when the switch (320, 420) is turned on is counted.

9. The dust sensor module (100, 400) of any one of claims 1 to 8, further comprising a converter (460) converting a voltage supplied from the battery (110, 410) into a direct current (DC) voltage between the battery (110, 410) and the switch (420).

10. The dust sensor module (100, 200, 300, 400) of any one of claims 1 to 9, wherein first power supplied to the controller (240, 340, 440) in the first mode is greater than second power supplied to the controller (240, 340, 440) in the second mode.

11. The dust sensor module (100, 200, 300, 400) of claim 10, wherein the second power is minimum power required to release the second mode.

12. The dust sensor module (100, 200, 300, 400) of any one of claims 1 to 11, further comprising a communication unit (235, 335, 435) transmitting and receiving a signal to and from a cleaner (1) in which the dust sensor module (100, 200, 300, 400) is mounted,
wherein the communication unit (235, 335, 435) receives power from the battery (110, 210, 310, 410) in the first mode and cuts off power supplied from the battery (110, 210, 310, 410) in the second mode.

13. The dust sensor module (100, 200, 300, 400) of claim 12, wherein the controller (240, 340, 440) transmits a dust sensing signal to the cleaner (1) in the first mode.

## Patentansprüche

1. Staubsensormodul (100, 200, 300, 400), das aufweist:
eine Batterie (210, 310, 410), die Energie liefert;
einen Sensor (231, 331, 431), der Staub unter Verwendung von von der Batterie (210, 310, 410) zugeleiteter Energie erfasst;
einen Detektor (250, 350, 450), der erfasst, ob das Staubsensormodul (100, 200, 300, 400) verwendet wird oder nicht; und
eine Steuereinheit (240, 340, 440), die in einem ersten Modus oder einem zweiten Modus basierend auf einem Erfassungsergebnis des Detektors (250, 350, 450) arbeitet,
wobei die Steuereinheit (240, 340, 440) im ersten Modus dem Sensor (231, 331, 431) Energie zuleitet und im zweiten Modus die dem Sensor (231, 331, 431) zugeleitete Energie unterbricht,
**dadurch gekennzeichnet, dass**
der Detektor (250, 350, 450) wenigstens eines von einem Beschleunigungssensor (250) oder einem Neigungssensor (350) aufweist, wobei der Beschleunigungssensor (250) eingerichtet ist, eine Neigung des Staubsensormoduls (100, 200, 400) zu erfassen,
wobei der Neigungssensor (350) wenigstens einen Endpunkt (350a) und wenigstens ein bewegliches Element (350b) aufweist und eingerichtet ist, die Neigung des Staubsensormoduls (100, 300, 400) in Abhängigkeit davon zu erfassen, ob das bewegliche Element (350b) den Endpunkt (350a) berührt oder nicht,
wobei die Steuereinheit (240, 340, 440) im ersten Modus arbeitet, wenn eine Neigungsänderungsrate des Staubsensormoduls (100, 200, 400) gleich oder größer als ein festgelegter Wert ist oder wenn das bewegliche Element (350b) des Neigungssensors (350, 450) den Endpunkt (350a) des Neigungssensors (350, 450) berührt, und die Steuereinheit (240, 340, 440) im zweiten Modus arbeitet, wenn die Neigungsänderungsrate des Staubsensormoduls (100, 200, 400), kleiner als der festgelegte Wert ist oder das bewegliche Element (350b) des Neigungssensors (350, 450) den Endpunkt (350a) des Neigungssensors (350, 450) nicht berührt.

2. Staub sensormodul (100, 200, 300, 400) nach Anspruch 1, das weiterhin einen Schalter (220, 320, 420) aufweist, der zwischen der Batterie (110, 210, 310, 410) und dem Sensor (231, 331, 431) eingeschaltet oder ausgeschaltet wird,
wobei die Steuereinheit (240, 340, 440) den Schalter (220, 320, 420) im ersten Modus einschaltet und den Schalter im zweiten Modus ausschaltet.

3. Staubsensormodul (100, 200, 400) nach Anspruch 1 oder 2, wobei die Steuereinheit (240, 440) eine Zeit zählt, wenn der Schalter (220, 420) im ersten Modus eingeschaltet ist, und den Schalter ausschaltet, wenn die gezählte Zeit gleich oder größer als eine festgelegte Zeit ist.

4. Staubsensormodul (100, 200, 400) nach Anspruch 3, wobei die Steuereinheit (240, 440) die gezählte Zeit zurückgesetzt, wenn die Neigungsänderung des Staubsensormoduls (100, 200, 400) erfasst wird, während die Zeit, wenn der Schalter (220, 420) eingeschaltet ist, gezählt wird.

5. Staubsensormodul (100, 300, 400) nach Anspruch 1 oder 2, wobei der Neigungssensor (350, 450) aufweist:
den Endpunkt (350a); und
das wenigstens eine bewegliche Element (350b), das den Endpunkt (350a) gemäß der Bewegung davon in einem Innenraum berührt oder nicht berührt, und
wobei der Endpunkt (350a) in einer Richtung ausgebildet ist, in der sich das wenigstens eine bewegliche Element (350b) bewegt, wenn das Staub sensormodul (100, 300, 400) in einem Zustand verwendet wird, in dem es in einem Staubsauger (1) angebracht ist.

6. Staubsensormodul (100, 300, 400) nach Anspruch 5, wobei der Neigungssensor (350, 450) in einem Griff (20) des Staubsaugers (1) oder einem Verlängerungsrohr (21), bei dem eine Luftansaugdüse damit verbunden ist, angebracht ist.

7. Staub sensormodul (100, 300, 400) nach einem der Ansprüche 1, 2, 5 oder 6, wobei die Steuereinheit (350, 450) eine Zeit zählt, wenn der Schalter (320, 420) im ersten Modus eingeschaltet ist und den Schalter ausschaltet, wenn die gezählte Zeit gleich oder größer als eine festgelegte Zeit ist.

8. Staubsensormodul (100, 300, 400) nach Anspruch 7, wobei die Steuereinheit (350, 450) die gezählte Zeit zurücksetzt, wenn die Neigungsänderung der Staubsensormoduls (100, 300, 400) erfasst wird, während die Zeit, wenn der Schalter (320, 420) eingeschaltet ist, gezählt wird.

9. Staubsensormodul (100, 400) nach einem der Ansprüche 1 bis 8, das weiterhin einen Wandler (460) aufweist, der eine von der Batterie (110, 410) zugeleitete Spannung in eine Gleichstrom-(DC)-Spannung zwischen der Batterie (110, 410) und dem Schalter (420) umwandelt.

10. Staub sensormodul (100, 200, 300, 400) nach einem der Ansprüche 1 bis 9, wobei die der Steuereinheit (240, 340, 440) im ersten Modus zugeleitete erste Energie größer als die der Steuereinheit (240, 340, 440) im zweiten Modus zugeleitete zweite Energie ist.

11. Staubsensormodul (100, 200, 300, 400) nach Anspruch 10, wobei die zweite Energie eine Mindestenergie ist, die erforderlich ist, um den zweiten Modus freizugeben.

12. Staub sensormodul (100, 200, 300, 400) nach einem der Ansprüche 1 bis 11, das weiterhin eine Kommunikationseinheit (235, 335, 435) aufweist, die ein Signal zu und von einem Staubsauger (1), in dem das Staubsensormodul (100, 200, 300, 400) angebracht ist, sendet und empfängt,
wobei die Kommunikationseinheit (235, 335, 435) Energie von der Batterie (110, 210, 310, 410) im ersten Modus empfängt und im zweiten Modus die von der Batterie (110, 210, 310, 410) zugeleitete Energie unterbricht.

13. Staubsensormodul (100, 200, 300, 400) nach Anspruch 12, wobei die Steuereinheit (240, 340, 440) im ersten Modus ein Stauberfassungssignal an den Staubsauger (1) überträgt.

## Revendications

1. Module de capteur de poussière (100, 200, 300, 400), comprenant :
une batterie (210, 310, 410) qui fournit de l'énergie ;
un capteur (231, 331, 431) qui détecte la poussière à l'aide de l'énergie fournie par la batterie (210, 310, 410) ;
un détecteur (250, 350, 450) qui détecte si le module de capteur de poussière (100, 200, 300, 400) est utilisé ou non ; et
un contrôleur (240, 340, 440) qui fonctionne dans un premier mode ou un second mode sur la base d'un résultat de détection du détecteur (250, 350, 450),
dans lequel le contrôleur (240, 340, 440) fournit l'énergie au capteur (231, 331, 431) dans le premier mode et coupe l'énergie fournie au capteur (231, 331, 431) dans le second mode,
**caractérisé en ce que**
le détecteur (250, 350, 450) comprend au moins l'un d'un capteur d'accélération (250) ou d'un capteur d'inclinaison (350),
dans lequel le capteur d'accélération (250) est configuré pour détecter une inclinaison du module de capteur de poussière (100, 200, 400),
dans lequel le capteur d'inclinaison (350) comprend au moins une borne (350a) et au moins un élément mobile (350b), et est configuré pour détecter l'inclinaison du module de capteur de poussière (100, 300, 400) selon que l'élément mobile (350b) soit en contact ou non avec la borne (350a),
dans lequel le contrôleur (240, 340, 440) fonctionne dans le premier mode lorsqu'un taux de changement d'inclinaison du module de capteur de poussière (100, 200, 400) est égal ou supérieur à une valeur définie ou lorsque l'élément mobile (350b) du capteur d'inclinaison (350, 450) entre en contact avec la borne (350a) du capteur d'inclinaison (350, 450), et le contrôleur (240, 340, 440) fonctionne dans le second mode lorsque le taux de changement d'inclinaison du module de capteur de poussière (100, 200, 400) est inférieur à la valeur définie ou l'élément mobile (350b) du capteur d'inclinaison (350, 450) n'est pas en contact avec la borne (350a) du capteur d'inclinaison (350, 450).

2. Module de capteur de poussière (100, 200, 300, 400) selon la revendication 1, comprenant en outre un commutateur (220, 320, 420) activé ou désactivé entre la batterie (110, 210, 310, 410) et le capteur (231, 331, 431),
dans lequel le contrôleur (240, 340, 440) active le commutateur (220, 320, 420) dans le premier mode et désactive le commutateur dans le second mode.

3. Module de capteur de poussière (100, 200, 400) selon la revendication 1 ou 2, dans lequel le contrôleur (240, 440) compte une durée pendant laquelle le commutateur (220, 420) est activé dans le premier mode, et désactive le commutateur lorsque la durée comptée est égale ou supérieure à une durée définie.

4. Module de capteur de poussière (100, 200, 400) selon la revendication 3, dans lequel le contrôleur (240, 440) réinitialise la durée comptée lorsque le changement d'inclinaison du module de capteur de poussière (100, 200, 400) est détecté pendant que la durée pendant laquelle le commutateur (220, 420) est activé est comptée.

5. Module de capteur de poussière (100, 300, 400) selon la revendication 1 ou 2,
dans lequel le capteur d'inclinaison (350, 450) comprend :
la borne (350a) ; et
le au moins un élément mobile (350b) qui entre en contact ou non avec la borne (350a) selon un mouvement de celle-ci dans un espace interne, et
dans lequel la borne (350a) est formée dans une direction dans laquelle le au moins un élément mobile (350b) se déplace, lorsque le module de capteur de poussière (100, 300, 400) est utilisé en étant monté dans un appareil de nettoyage (1).

6. Module de capteur de poussière (100, 300, 400) selon la revendication 5, dans lequel le capteur d'inclinaison (350, 450) est monté dans une poignée (20) de l'appareil de nettoyage (1) ou un tuyau prolongateur (21) ayant une buse d'aspiration d'air reliée à celui-ci.

7. Module de capteur de poussière (100, 300, 400) selon l'une quelconque des revendications 1, 2, 5 ou 6, dans lequel le contrôleur (350, 450) compte une durée pendant laquelle le commutateur (320, 420) est activé dans le premier mode, et désactive le commutateur dès que la durée comptée est égale ou supérieure à une durée définie.

8. Module de capteur de poussière (100, 300, 400) selon la revendication 7, dans lequel le contrôleur (350, 450) réinitialise la durée comptée lorsque le changement d'inclinaison du module de capteur de poussière (100, 300, 400) est détecté pendant que la durée pendant laquelle le commutateur (320, 420) est activé est comptée.

9. Module de capteur de poussière (100, 400) selon l'une quelconque des revendications 1 à 8, comprenant en outre un convertisseur (460) qui convertit une tension fournie par la batterie (110, 410) en une tension de courant continu (CC) entre la batterie (110, 410) et le commutateur (420).

10. Module de capteur de poussière (100, 200, 300, 400) selon l'une quelconque des revendications 1 à 9, dans lequel la première énergie fournie au contrôleur (240, 340, 440) dans le premier mode est supérieure à la seconde énergie fournie au contrôleur (240, 340, 440) dans le second mode.

11. Module de capteur de poussière (100, 200, 300, 400) selon la revendication 10, dans lequel la seconde énergie est une énergie minimum nécessaire pour quitter le second mode.

12. Module de capteur de poussière (100, 200, 300, 400) selon l'une quelconque des revendications 1 à 11, comprenant en outre une unité de communication (235, 335, 435) qui transmet et reçoit un signal vers et depuis un appareil de nettoyage (1) dans lequel le module de capteur de poussière (100, 200, 300, 400) est monté,
dans lequel l'unité de communication (235, 335, 435) reçoit de l'énergie de la part de la batterie (110, 210, 310, 410) dans le premier mode et coupe l'énergie fournie par la batterie (110, 210, 310, 410) dans le second mode.

13. Module de capteur de poussière (100, 200, 300, 400) selon la revendication 12, dans lequel le contrôleur (240, 340, 440) transmet un signal de détection de poussière à l'appareil de nettoyage (1) dans le premier mode.
